# EUROPÄISCHE PATENTSCHRIFT

(11) **EP 0 984 257 B1**
(45) Veröffentlichungstag und Bekanntmachung des Hinweises auf die Patenterteilung: **04.06.2003**
(21) Anmeldenummer: 98116412.2
(22) Anmeldetag: 31.08.1998
(51) Int. Cl.: G01L 9/00, G01L 13/02, G01L 19/00, G01L 19/14, G01L 27/00

(54) **Selbsttätig abgleichbare Einrichtung zur Messung einer Druckdifferenz**
Autocalibrating device for measuring differential pressure
Dispositif avec calibration automatique pour la mesure de pression différentielle

(43) Veröffentlichungstag der Anmeldung: 08.03.2000
(73) Patentinhaber: Siemens Building Technologies AG, 6300 Zug (CH)
(72) Erfinder: Studer, Werner, CH-6315 Oberägeri (CH); Jandl, Josef, CH-6300 Zug (CH); Städelin, Stefan, CH-5634 Merenschwand (CH)
(74) Vertreter: Berg, Peter, Dipl.-Ing.

(56) Entgegenhaltungen:
- FR-A- 2 651 318
- US-A- 4 476 707
- US-A- 4 754 651
- PATENT ABSTRACTS OF JAPAN vol. 016, no. 032 (P-1303), 27. Januar 1992 & JP 03 242515 A (TOSHIBA CORP), 29. Oktober 1991

## Beschreibung

Die Erfindung bezieht sich auf eine Einrichtung der im Oberbegriff des Anspruchs 1 genannten Art.

Solche Einrichtungen werden vorteilhaft zur Erfassung des Durchflusses eines Strömungsmediums verwendet, wobei der erfasste Durchfluss beispielsweise zur Regelung der Frischluftzufuhr eines Raumes oder zur Energieverrechnung dient.

Derartige Einrichtungen sind mit Vorteil in einem System mit variablem Volumenstrom einsetzbar, bei dem die Zonentemperatur durch Veränderung des Luftvolumenstromes geregelt wird. In der Regel wird dieses, unter der Bezeichnung VAV (variable air volume) bekannte Verfahren zur Kühlung eingesetzt, wenn also die Zulufttemperatur niedriger als die gewünschte Zonentemperatur ist.

Die Anwendung derartiger Einrichtungen ist jedoch nicht auf die Heizungs-, Lüftungs und Klimatechnik beschränkt. Je nach Ausgestaltung der Einrichtung sind Differenzdrücke in gasförmigen oder in flüssigen Strömungsmedien erfassbar.

Es ist eine Einrichtung dieser Art bekannt (WO 90/05289 A1) die einen Differenzdrucksensor, ein Ventil und eine Schaltung mit mehreren Operationsverstärkern aufweist. Die besagte Einrichtung ist so ausgelegt, dass der Differenzdrucksensor durch das Ventil kurzschliessbar ist.

Aus US 3 509 767 ist ferner eine Einrichtung bekannt, bei der ein Differenzdruck über einer Blende von einem Differenzdrucksensor erfassbar ist. Die Einrichtung weist mehrere Ventile auf, welche derart ansteuerbar sind, dass der Differenzdrucksensor bezüglich eines anliegenden Differenzdruckes kurzschliessbar ist.

Eine selbsttätig abgleichbare Einrichtung zur Messung einer Druckdifferenz gemäss dem Oberbegriff des Anspruchs 1 ist auch aus US 4,754,651 bekannt.

Bekannte Einrichtungen dieser Art sind relativ laut und weisen mehrere Bauteile wie Sensor, Ventil, Ventilantrieb, Elektronik und Verbindungselemente auf, die vor Ort an einer Messstelle einzubauen sind. Die bekannten Einrichtungen erfordern deshalb am Einsatzort relativ hohen Montageaufwand und Einbauplatz, sie sind zudem relativ störungsanfällig und teuer.

Der Erfindung liegt die Aufgabe zugrunde, eine selbsttätig abgleichbare Einrichtung zur Messung einer Druckdifferenz zu schaffen, welche geräuscharm, zuverlässig und kostengünstig auf kleinstem Raum aufbaubar ist.

Die genannte Aufgabe wird erfindungsgemäss durch die Merkmale des Anspruchs 1 gelöst. Vorteilhafte Ausgestaltungen ergeben sich aus den abhängigen Ansprüchen.

Nachfolgend werden Ausführungsbeispiele der Erfindung anhand der Zeichnung näher erläutert.

Es zeigen:
- Fig. 1: eine Explosionsdarstellung einer selbsttätig abgleichbaren Einrichtung zur Messung einer Druckdifferenz,
- Fig. 2: ein Blockschema der Einrichtung, und
- Fig. 3: eine prinzipielle Darstellung mit Funktionselementen der Einrichtung.

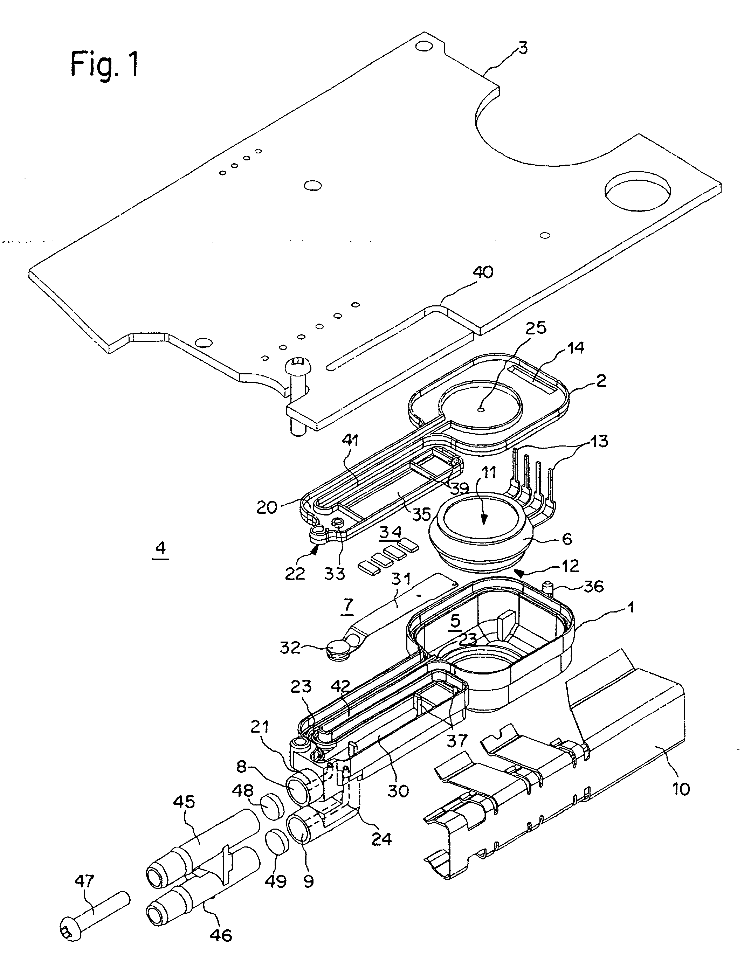

In der Fig. 1 bezeichnet 1 einen Gehäusedeckel, der über eine Dichtungsplatte 2 derart an einer Leiterplatte 3 befestigbar ist, dass die Leiterplatte 3 und der Gehäusedeckel 1 zusammen mit der zwischen der Leiterplatte 3 und dem Gehäusedeckel 1 angeordneten Dichtungsplatte 2 ein Gehäuse 4 bilden. In einen Innenraum 5 des Gehäuses 4 sind ein Fühlerelement 6 und ein Ventil 7 angeordnet. Am Gehäusedeckel 1 sind eine erste Anschlussöffnung 8 und eine zweite Anschlussöffnung 9 für ein Strömungsmedium ausgebildet.

In einer vorteilhaften Ausführungsvariante wird der Gehäusedeckel 1 und die Leiterplatte 3 durch ein Klemmelement 10 zusammengehalten, wobei das Klemmelement 10 derart ausgebildet ist, dass die Dichtungsplatte 2 gleichmässig und gasdicht zwischen die Leiterplatte 3 und den Gehäusedeckel 1 geklemmt wird.

Das Fühlerelement 6 ist ein Differenzdruckfühler mit einer ersten Druckaufnehmerseite 11 und einer zweiten Druckaufnehmerseite 12 und mit elektrischen Anschlüssen 13. Mit Vorteil sind die elektrischen Anschlüsse 13 durch eine erste in der Dichtungsplatte ausgebildete Öffnung 14 auf die Leiterplatte 3 geführt.

Ein erster Druckzuführungskanal 20 ist von aussen her über die erste Anschlussöffnung 8 zugänglich, wobei die erste Anschlussöffnung 8 über einen ersten Durchgang 21 und eine zweite in der Dichtungsplatte 2 ausgebildete Öffnung 22 mit dem ersten Druckzuführungskanal 20 verbunden ist. Die Dichtungsplatte 2 ist derart ausgeführt, dass der erste Druckzuführungskanal 20 im wesentlichen zwischen der Leiterplatte 3 und der Dichtungsplatte 2 ausgeformt und geführt ist.

Ein zweiter Druckzuführungskanal 23 ist von aussen her über die zweite Anschlussöffnung 9 zugänglich, wobei die Anschlussöffnung 9 über einen zweiten Durchgang 24 mit dem zweiten Druckzuführungskanal 23 verbunden ist. Mit Vorteil sind der Gehäusedeckel 1 und die Dichtungsplatte 2 derart ausgeführt, dass der zweite Druckzuführungskanal 23 im wesentlichen zwischen dem Gehäusedeckel 1 und der Dichtungsplatte 2 ausgeformt und geführt ist.

Das Fühlerelement 6 ist im Innenraum 5 derart zwischen dem ersten Druckzuführungskanal 20 und dem zweiten Druckzuführungskanal 23 angeordnet, dass die erste Druckaufnehmerseite 11 von einem an der ersten Anschlussöffnung 8 eintretendem Strömungsmedium und die zweite Druckaufnehmerseite 12 von einem an der zweiten Anschlussöffnung 9 eintretenden Strömungsmedium beaufschlagbar sind, sodass ein zwischen der ersten Anschlussöffnung 8 und der zweiten Anschlussöffnung 9 herrschender Differenzdruck vom Fühlerelement 6 erfassbar ist.

Mit Vorteil weist die Dichtungsplatte 2 eine dritte Öffnung 25 auf, durch welche der erste Druckzuführungskanal 20 auf die erste Druckaufnehmerseite 11 geleitet ist.

Das Ventil 7 ist derart steuerbar aufgebaut und angeordnet, dass eine zwischen den beiden Druckaufnehmerseiten 11 und 12 liegende Druckdifferenz durch das Ventil 7 kurzschliessbar ist.

In einer vorteilhaften Ausführung der Einrichtung ist das Ventil 7 in einer Kammer 30 angeordnet, welche im Gehäusedeckel 30 ausgebildet und mit dem zweiten Druckzuführungskanal 23 und dem zweiten Durchgang 24 verbunden ist.

Das Ventil 7 weist einen um einen Arm 31 zwischen zwei Endlagen bewegbaren Verschlussteil 32 auf. In einer ersten Endlage wird eine vierte in der Dichtungsplatte 2 ausgebildete Öffnung 33 durch den Verschlussteil 32 dicht verschlossen. Die vierte Öffnung 33 führt vom ersten Druckzuführungskanal 20 in die Kammer 30.

In der zweiten Endlage wird der zweite Durchgang 24 durch den Verschlussteil 32 verschlossen, während die vierte Öffnung 33 offen ist, sodass die beiden Druckaufnehmerseiten 11 und 12 durch das Ventil 7 kurzgeschlossen sind.

In einer vorteilhaften Ausführung des Ventils 7 ist der Verschlussteil 32 in seiner Ruhelage in der ersten Endlage, sodass das Fühlerelement 6 zur Messung der zwischen den beiden Anschlussöffnungen 8 und 9 herrschenden Druckdifferenz vorbereitet ist. Zu diesem Zweck ist der Arm 31 derart vorgespannt, dass der Verschlussteil 32 in der Ruhelage die vierte Öffnung 33 dicht abschliesst. Der Arm 31 ist aus Bi-Metall oder einer Formgedächtnislegierung herstellbar und damit thermisch auslenkbar, sodass der Verschlussteil thermisch zwischen der ersten und der zweiten Endlage bewegbar ist.

In einer vorteilhaften Ausführung ist der Arm 31 aus Bi-Metall und durch ein Heizelement 34 indirekt heizbar. Das Heizelement 34 ist vorteilhafterweise durch wenigstens einen Heizwiderstand ausgeführt, der auf der Leiterplatte 3 gegen den Arm 31 hin angeordnet ist. Die Dichtungsplatte 2 weist im Bereich des Heizelementes 34 einen Ausschnitt 35 zur Wärmeübertragung auf.

Eine vorteilhafte Implementierung des Heizelementes 34 besteht aus einer Reihe von Heizwiderstä den, welche als sogenanntes surface mounted device (SMD) auf der Leiterplatte 3 angeordnet ist.

Es versteht sich von selbst, dass die thermisch gesteuerte Bewegung des Verschlussteiles 32 grundsätzlich auch durch direktes Heizen erreichbar ist. Im weiteren versteht es sich von selbst, dass eine Bewegung des Verschlussteiles 32 zwischen der ersten und der zweiten Endlage grundsätzlich auch piezoelektrisch, magnetisch oder auf eine andere bekannte Art ausführbar ist, indem beispielsweise ein piezoelektrischer, elektromagnetischer, hydraulischer oder thermo-hydraulischer Antrieb eingesetzt wird.

Thermische Antriebe wie auch piezoelektrische Antriebe sind in der vorgeschlagenen Einrichtung derart implementierbar, dass die Einrichtung besonders geräuscharm betreibbar ist, da bei dem im Gehäuse 4 integrierten Ventil 7 nur äusserst kleine Bewegungen des Verschlussteiles 32 erforderlich sind. Ein typisches Mass für den erforderlichen Weg des Verschlussteiles 32 zwischen der ersten und der zweiten Endlage beträgt etwa 0,3 Millimeter.

Der Gehäusedeckel 1 ist mit Vorteil aus Kunststoff und in einer Spritzgusstechnik hergestellt. Mit Vorteil werden auch ein Mittel 36 zur richtigen Positionierung des Gehäusedeckels 1 bezüglich der Leiterplatte 3 und ein Mittel 37 zur Positionierung des Armes 31 direkt am Gehäusedeckel 1 ausgebildet.

Die Dichtungsplatte 2 ist mit Vorteil aus Gummi oder aus einem weichen Kunststoff. In einer vorteilhaften Ausführung der Dichtungsplatte 2 sind Rippen 39 zur Halterung des Armes 31 direkt an der Dichtungsplatte 2 ausgebildet.

Bei Verwirklichungen des thermisch antreibbarem Ventils 7 wird die Einrichtung mit Vorteil so aufgebaut, dass der Druckzuführungskanal 20 bzw. 23 zwischen der den Arm 31 aufweisenden Kammer 30 und dem Fühlerelement 6 genügend lang ist, sodass der thermisch antreibbare Arm 31 und das Fühlerelement 6 thermisch ausreichend entkoppelt sind, sodass das Fühlerelement 6 durch ein Ansteuern des Ventils nicht unzulässig erwärmt wird. Eine kompakte Bauweise der Einrichtung und trotzdem relativ lange Druckzuführungskanäle 20 und 23 sind erreichbar, indem die den Druckzuführungskanal 20 bzw. 23 führenden Zonen des Gehäusedeckels 1, der Dichtungsplatte 2 und der Leiterplatte 3 schleifenförmig ausgelegt sind. Eine vorteilhafte schleifenförmige Auslegung der Einrichtung ergibt sich durch im Wesentlichen deckungsgleiche Einschnitte 40, 41 und 42 in der Leiterplatte 3, der Dichtungsplatte 2 und dem Gehäusedeckel 1.

In einer vorteilhaften Ausbildung der beiden Anschlussöffnungen 8 und 9 sind diese mit Anschlussnippeln 45 und 46 ausgeführt, durch die eine mechanische Entkoppelung des Gehäuses 4 von dessen Umgebung erreichbar ist. Die Anschlussnippel 45 und 46 sind beispielsweise durch eine Schraube 47 an einem nicht dargestellten Körper fixierbar, was die besagte Entkoppelung des Gehäuses 4 vom Körper bewirkt. Der Anschlussöffnung 8 bzw. 9 wird mit Vorteil ein Filter 48 bzw. 49 vorgesetzt. Für das Strömungsmedium Luft ist das Filter 48 bzw. 49 ein Staubfilter.

Die vorgeschlagene Einrichtung mit dem die Leiterplatte 3 umfassenden Gehäuse 4 und den im Gehäuse 4 angeordneten Fühlerelement 6 und dem Ventil 7 ist je nach Bedarf durch weitere, in vorteilhafter Art auf der Leiterplatte 3 angeordnete Funktionseinheiten ergänzbar.

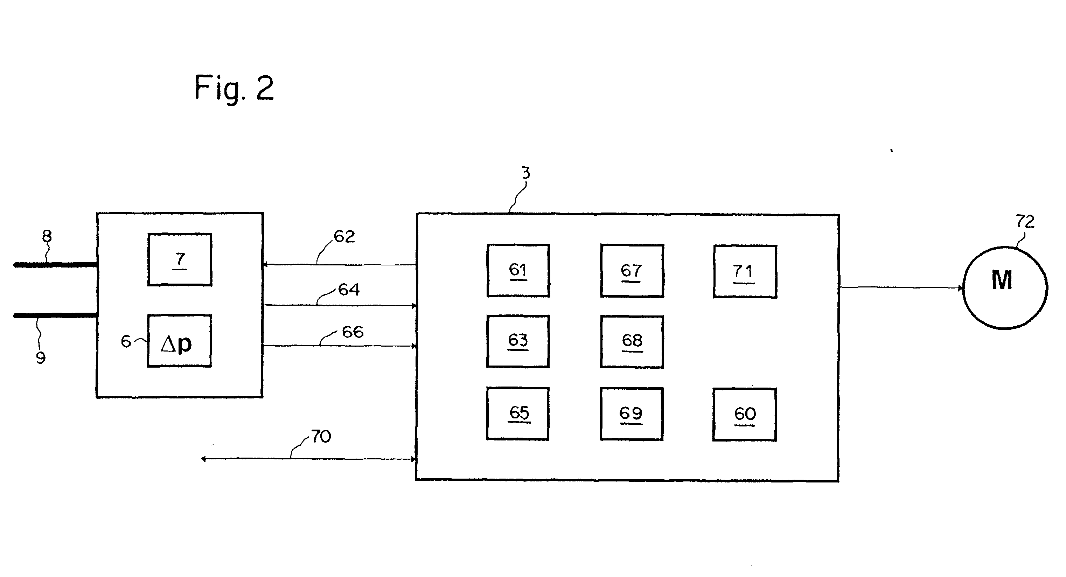

In der Fig. 2 sind auf der Leiterplatte 3 beispielhaft eine Stromversorgungseinheit 60, Ventil-Steuer-Mittel 61 zur Generierung eines Ventil-Steuersignals 62, Mittel 63 zur Gewinnung eines Differenzdrucksignals aus einem ersten Sensorsignal 64, Mittel 65 zur Gewinnung eines Temperatursignals aus einem zweiten Sensorsignal 66, Mittel 67 zur selbsttätigen Steuerung eines Abgleichverfahrens, Mittel 68 zur Durchführung eines Regelalgorithmus, Mittel 69 zur Generierung und/oder Auswertung von Kommunikationssignalen 70 und Ausgangstreiber 71 für ein Stellglied 72. Das Stellglied 72 ist beispielsweise ein Gebläsemotor. Insbesondere die Mittel 68 zur Durchführung eines Regelalgorithmus sind über die Kommunikationssignale 70 parametrierbar.

Mit Vorteil sind insbesondere die Mittel 63 zur Gewinnung eines Differenzdrucksignals, die Mittel 65 zur Gewinnung eines Temperatursignals, die Mittel 67 zur selbsttätigen Steuerung eines Abgleichverfahrens, die Mittel 68 zur Durchführung eines Regelalgorithmus und die Mittel 69 zur Generierung und/oder Auswertung von Kommunikationssignalen im wesentlichen durch einen entsprechend programmierten Mikroprozessor oder Mikrocomputer implementiert, der auf der Leiterplatte 3 angeordnet ist. Bei Bedarf ist auf der Leiterplatte auch ein application specific integrated circuit ASIC angeordnet, durch den die Funktionalität des Mikroprozessors oder Mikrocomputers erweiterbar ist.

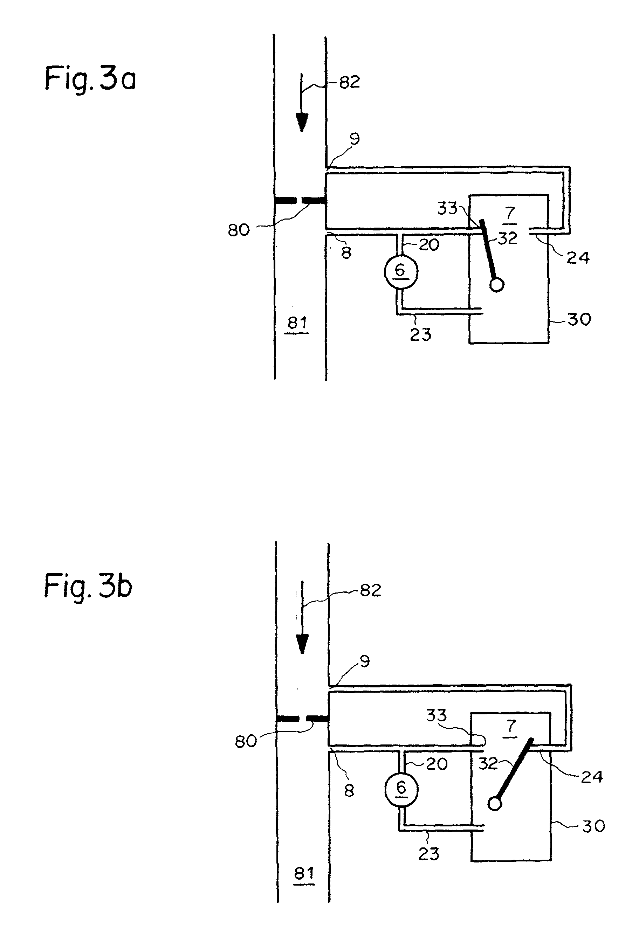

In Fig. 3a und Fig. 3b sind die beiden Anschlussöffnungen 8 und 9 über einer Blende bzw. über einem Drosselelement 80 mit dem in einer Leitung 81 strömenden Strömungsmedium 82 verbunden.

In der Fig. 3a ist der Verschlussteil 32 des Ventils 7 in der ersten Endlage dargestellt, in der das Fühlerelement 6 zur Messung des Differenzdruckes über der Blende 80 vorbereitet ist.

In der Fig. 3b ist der Verschlussteil 32 des Ventils 7 in der zweiten Endlage dargestellt, in der das Fühlerelement 6 bezüglich des anliegenden statischen Druckes kurzgeschlossen ist, der am Fühlerelement 6 anliegende Druck ist also null. In diesem Zustand ist das Sensorsignal 64 (Fig. 2) mit Differenzdruck=0 zu interpretieren.

Ein vorteilhaftes Verfahren zum selbsttätigen Abgleichen bzw. Kalibrieren der Einrichtung umfasst wenigstens folgende drei Verfahrensschritte:

Einen ersten Verfahrensschritt, in dem das Ventil-Steuersignal generiert wird, durch welches der Verschlussteil 32 in die zweite Endlage gebracht wird (Fig. 3b).

Einen zweiten Verfahrensschritt, in dem das erste Sensorsignal 64 ausgewertet und ein Korrekturwert für gemessenen Differenzdruckwerte ermittelt und abgespeichert wird.

Einen dritten Verfahrensschritt, in dem das Ventil-Steuersignal generiert wird, durch welches der Verschlussteil 32 in die erste Endlage gebracht wird (Fig. 3a).

Das Verfahren zum selbsttätigen Abgleichen der Einrichtung wird je nach Bedarf periodisch oder bei gewissen Vorbedingungen durch die Mittel 67 zur selbsttätigen Steuerung des Abgleichverfahrens durchgeführt.

Bei Verwendung gewisser Fühlertypen ist das Fühlerelement 6 in vorteilhafter Art sowohl zum Messen eines Differenzdruckes wie auch zum Messen der Temperatur des Strömungsmediums 81 einsetzbar.

Wird das Fühlerelement 6 beispielsweise durch Halbleiter implementiert, sind Temperaturänderungen als Widerstands- und/oder Spannungsänderungen durch Auswertung des zweiten Sensorsignales 66 erfassbar.

Zur Erhöhung der Messgenauigkeit wird bei der Ermittlung des Differenzdruckes bei Bedarf die Temperatur des Strömungsmediums 82 mitberücksichtigt.

## Patentansprüche

1. Selbsttätig abgleichbare Einrichtung zur Messung einer Druckdifferenz, mit
- einem Gehäuse (4),
- einem im Gehäuse (4) angeordneten Fühlerelement (6) und
- einem im Gehäuse (4) angeordneten Ventil (7) mit einem Verschlussteil (32),
- wobei das Gehäuse eine erste Anschlussöffnung (8) für einen ersten Druckzuführungskanal (20) und eine zweite Anschlussöffnung (9) für einen zweiten Druckzuführungskanal (23) für ein Strömungsmedium aufweist, und
- wobei das Fühlerelement (6) derart zwischen dem ersten Druckzuführungskanal (20) und dem zweiten Druckzuführungskanal (23) angeordnet ist, dass eine zwischen der ersten Anschlussöffnung (8) und der zweiten Anschlussöffnung (9) liegende Druckdifferenz vom Fühlerelement (6) erfassbar ist, und
- wobei die Druckdifferenz über dem Fühlerelement (6) durch das Ventil (7) kurzschliessbar ist,
**dadurch gekennzeichnet,**
**dass** das Gehäuse (4) eine Leiterplatte (3), einen Gehäusedeckel (1) und eine Dichtungsplatte (2) aufweist,
- wobei die Dichtungsplatte (2) zwischen der Leiterplatte (3) und dem Gehäusedeckel (1) angeordnet ist und
- wobei die Dichtungsplatte (2) derart ausgeführt ist, dass der erste Druckzuführungskanal (20) im wesentlichen zwischen der Leiterplatte (3) und der Dichtungsplatte (2) ausgeformt und geführt ist.

2. Einrichtung nach Anspruch 1, **dadurch gekennzeichnet dass** die Leiterplatte (3) elektrische Anschlüsse der Einrichtung aufweist.

3. Einrichtung nach einem vorangehenden Anspruch, **dadurch gekennzeichnet, dass** der zweite Druckzuführungskanal (23) im wesentlichen zwischen dem Gehäusedeckel (1) und der Dichtungsplatte (2) ausgeformt und geführt ist.

4. Einrichtung nach einem vorangehenden Anspruch, **dadurch gekennzeichnet, dass** der Verschlussteil (32) thermisch zwischen zwei Endstellungen bewegbar ist.

5. Einrichtung nach einem vorangehenden Anspruch, **dadurch gekennzeichnet, dass** der Verschlussteil (32) magnetisch zwischen zwei Endstellungen bewegbar ist.

6. Einrichtung nach einem vorangehenden Anspruch, **dadurch gekennzeichnet, dass** der Verschlussteil (32) piezoelektrisch zwischen zwei Endstellungen bewegbar ist.

7. Einrichtung nach einem vorangehenden Anspruch, **dadurch gekennzeichnet, dass** der Verschlussteil (32) über eine Bimetallfeder (31) bewegbar ist.

8. Einrichtung nach einem vorangehenden Anspruch, **dadurch gekennzeichnet, dass** der Verschlussteil (32) über ein Element (31) aus einer Formgedächtnislegierung bewegbar ist.

9. Einrichtung nach einem der Ansprüche 4, 7 oder 8, **dadurch gekennzeichnet, dass** die Wärmeenergie zur Bewegung des Verschlussteiles (32) indirekt durch wenigstens einen Heizwiderstand (34) zuführbar ist, der auf der Leiterplatte (3) angeordnet ist.

10. Einrichtung nach einem vorangehenden Anspruch, **dadurch gekennzeichnet, dass** das Gehäuse (4) durch ein Klemmelement (10) fixiert ist.

11. Einrichtung nach einem vorangehenden Anspruch, **gekennzeichnet durch** eine auf der Leiterplatte (3) angeordnete elektronische Schaltung und/oder einen auf der Leiterplatte (3) angeordnenten Mikroprozessor bzw. Mikrocomputer, **durch** den eine selbsttätige Kalibrierung der Einrichtung durchführbar ist.

12. Einrichtung nach einem vorangehenden Anspruch, **dadurch gekennzeichnet, dass** auf der Leiterplatte (3) Mittel (68, 71) zur Ansteuerung eines Stellgliedes (72) angeodnet sind.

13. Einrichtung nach einem vorangehenden Anspruch, **dadurch gekennzeichnet, dass** auf der Leiterplatte (3) Kommunikationsmittel (69) angeodnet sind.

## Claims

1. An automatically compensatable device for measuring a pressure difference comprising
- a housing (4)
- a sensor element (6) disposed in the housing (4) and
- a valve (7) disposed in the housing (4), with a closure portion (32),
- wherein the housing has a first connecting opening (8) for a first pressure feed passage (20) and a second connecting opening (9) for a second pressure feed passage (23) for a flow medium, and
- wherein the sensor element (6) is arranged between the first pressure feed passage (20) and the second pressure feed passage (23) in such a way that a pressure difference between the first connecting opening (8) and the second connecting opening (9) can be detected by the sensor element (6), and
- wherein the pressure difference across the sensor element (6) can be short-circuited by the valve (7),
**characterised in that**
the housing (4) has a circuit board (3), a housing cover (1) and a sealing plate (2),
- wherein the sealing plate (2) is arranged between the circuit board (3) and the housing cover (1), and
- wherein the sealing plate (2) is such that the first pressure feed passage (20) is substantially shaped and passed between the circuit board (3) and the sealing plate (2).

2. A device according to claim 1 **characterised in that** the circuit board (3) has electrical connections of the device.

3. A device according to a preceding claim **characterised in that** the second feed passage (23) is essentially shaped and passed between the housing cover (1) and the sealing plate (2).

4. A device according to a preceding claim **characterised in that** the closure portion (32) is thermally movable between two limit positions.

5. A device according to a preceding claim **characterised in that** the closure portion (32) is magnetically movable between two limit positions.

6. A device according to a preceding claim **characterised in that** the closure portion (32) is piezoelectrically movable between two limit positions.

7. A device according to a preceding claim **characterised in that** the closure portion (32) is movable by way of a bimetal spring (31).

8. A device according to a preceding claim **characterised in that** the closure portion (32) is movable by way of an element (31) of a shape memory alloy.

9. A device according to one of claims 4, 7 and 8 **characterised in that** the thermal energy for movement of the closure portion (32) is supplied indirectly by at least one heating resistor (34) which is arranged on the circuit board (3).

10. A device according to a preceding claim **characterised in that** the housing (4) is fixed by a clamping element (10).

11. A device according to a preceding claim **characterised by** an electronic circuit arranged on the circuit board (3) and/or a microcomputer or microprocessor arranged on the circuit board (3), by which automatic calibration of the device can be effected.

12. A device according to a preceding claim **characterised in that** means (68, 71) for actuating a control member (72) are arranged on the circuit board (3).

13. A device according to a preceding claim **characterised in that** communication means (69) are arranged on the circuit board (3).

## Revendications

1. Dispositif avec calibration automatique pour la mesure de pression différentielle, comprenant
- un boîtier (4),
- un élément capteur (6) disposé dans le boîtier (4), et
- une soupape (7) avec un élément de fermeture (32) disposée dans le boîtier (4),
- le boîtier présentant une première ouverture de raccordement (8) pour un premier canal d'amenée de pression (20) et une deuxième ouverture de raccordement (9) pour un deuxième canal d'amenée de pression (23) pour un fluide, et
- l'élément capteur (6) étant disposé entre le premier canal d'amenée de pression (20) et le deuxième canal d'amenée de pression (23) de telle sorte, qu'une pression différentielle présente entre la première ouverture de raccordement (8) et la deuxième ouverture de raccordement (9) peut être mesurée par l'élément capteur (6), et
- la pression différentielle pouvant être court-circuitée par la soupape (7) au-dessus de l'élément capteur (6),
**caractérisé en ce que** le boîtier (4) présente un module (3), un couvercle de boîtier (1) et une plaque d'étanchéité (2),
- la plaque d'étanchéité (2) étant disposée entre le module (3) et le couvercle de boîtier (1), et
- la plaque d'étanchéité (2) étant conçue telle que le premier canal d'amenée de pression (20) est formé et s'étend pour l'essentiel entre le module (3) et la plaque d'étanchéité (2).

2. Dispositif selon la revendication 1, **caractérisé en ce que** le module (3) présente des raccordements électriques du dispositif.

3. Dispositif selon l'une des revendications précédentes, **caractérisé en ce que** le deuxième canal d'amenée de pression (23) est formé et s'étend pour l'essentiel entre le couvercle de boîtier (1) et la plaque d'étanchéité (2).

4. , Dispositif selon l'une des revendications précédentes, **caractérisé en ce que** l'élément de fermeture (32) peut être déplacé thermiquement entre deux positions d'extrémité.

5. Dispositif selon l'une des revendications précédentes, **caractérisé en ce que** l'élément de fermeture (32) peut être déplacé magnétiquement entre deux positions d'extrémité.

6. Dispositif selon l'une des revendications précédentes, **caractérisé en ce que** l'élément de fermeture (32) peut être déplacé piézoélectriquement entre deux positions d'extrémité.

7. Dispositif selon l'une des revendications précédentes, **caractérisé en ce que** l'élément de fermeture (32) peut être déplacé à l'aide d'un ressort bimétallique (31).

8. Dispositif selon l'une des revendications précédentes, **caractérisé en ce que** l'élément de fermeture (32) peut être déplacé à l'aide d'un élément (31) réalisé à partir d'un alliage à mémoire de forme.

9. Dispositif selon l'une des revendications 4, 7 ou 8, **caractérisé en ce que** l'énergie thermique pour le déplacement de l'élément de fermeture (32) peut être amenée indirectement par au moins une résistance chauffante (34) disposée sur le module (3).

10. Dispositif selon l'une des revendications précédentes, **caractérisé en ce que** le boîtier (4) est fixé à l'aide d'un élément de serrage (10).

11. Dispositif selon l'une des revendications précédentes, **caractérisé par** un circuit électronique disposé sur le module (3) et/ou par un microprocesseur ou un micro-ordinateur disposé sur le module (3), permettant une calibration automatique du dispositif.

12. Dispositif selon l'une des revendications précédentes, **caractérisé en ce que** des moyens (68, 71) pour la commande d'un actionneur (72) sont disposés sur le module (3).

13. Dispositif selon l'une des revendications précédentes, **caractérisé en ce que** des moyens de communication (69) sont disposés sur le module (3).
